(19) **Europäisches Patentamt**

**European Patent Office**

**Office européen des brevets**

(11) **EP 1 207 380 B1**

(12) **EUROPEAN PATENT SPECIFICATION**

(45) Date of publication and mention
of the grant of the patent:
**17.05.2006 Bulletin 2006/20**

(51) Int Cl.:
*G01M 3/04* (2006.01)     *G21C 21/02* (2006.01)
*G21C 17/07* (2006.01)

(21) Application number: **00950154.5**

(22) Date of filing: **19.07.2000**

(86) International application number:
**PCT/RU2000/000305**

(87) International publication number:
**WO 2001/007886 (01.02.2001 Gazette 2001/05)**

(54) **METHOD AND DEVICE FOR CONTROLLING LEAK TIGHTNESS OF FUEL ELEMENTS**

VERFAHREN UND VORRICHTUNG ZUR DICHTIGKEITSPRÜFUNG VON
BRENNSTOFFELEMENTEN

DISPOSITIF DE CONTROLE D'ETANCHEITE DES ELEMENTS COMBUSTIBLES ET PROCEDE
CORRESPONDANT

(84) Designated Contracting States:
**DE FR GB**

(30) Priority: **23.07.1999 RU 99115960**

(43) Date of publication of application:
**22.05.2002 Bulletin 2002/21**

(73) Proprietor: **Otkrytoe Aktsionernoe Obschestvo
"Mashinostroitelny Zavod"
Elektrostal,144001 (RU)**

(72) Inventors:
 • **MEZHUEV, Valery Alexeevich
   Elektrostal,
   Moskovskaya obl., 144009 (RU)**
 • **KONOVALOV, Vitaly Fedorovich
   Moscow, 117454 (RU)**
 • **POTOSKAEV, Gennady Grigorievich
   Elektrostal,
   Moskovskaya obl., 144009 (RU)**
 • **FROLOV, Evgeny Vasilievich
   Elektrostal,
   Moskovskaya obl., 144009 (RU)**
 • **IVANOV, Alexandr Viktorovich
   Elektrostal,
   Moskovskaya obl., 144001 (RU)**
 • **KORYUK, Valentin Fedorovich
   Noginsk,
   Moskovskaya obl., 142401 (RU)**
 • **GALKOV, Gennady Anatolievich
   Noginsk,
   Moskovskaya obl., 142406 (RU)**

(74) Representative: **Kador & Partner
   Corneliusstrasse 15
   80469 München (DE)**

(56) References cited:
   **EP-A- 0 379 946          FR-A1- 2 646 910
   RU-C1- 2 094 861          US-A- 3 486 365
   US-A- 4 117 333**

 • **DATABASE WPI Week 198543 Derwent
   Publications Ltd., London, GB; AN 1985-267742
   XP002204691 & JP 60 181693 A (SHIMADZU
   CORP), 17 September 1985 (1985-09-17)**
 • **DATABASE WPI Week 198912 Derwent
   Publications Ltd., London, GB; AN 1989-091214
   XP002204692 & JP 63 252296 A (HITACHI LTD),
   19 October 1988 (1988-10-19)**
 • **A.G. SAMOILOV ET AL.: 'Dispersionnye
   teplovydelyajuschie elementy yadernykh
   reactorov' ATOMIZDAT 1969, MOSCOW, pages
   434 - 437, XP002953386**

## Description

*Field of Invention*

The invention relates to the nuclear power industry and may be used for testing leak tightness of fuel elements (TVELs) at the stage of production thereof.

*Prior art*

Known in the art is a method of testing leak tightness of closed articles (Baryshnikova N.G., *et al.* "Mass-Spectrometry Method of Leak Tightness", Electronnaya Technika, Ser. 8, No. 7, 1972) according to which an article is either welded in an atmosphere containing a trace gas, or pressure-tested by putting it into a trace gas under pressure. Then the article is transferred to a vacuum chamber, and trace gas leak therefrom is tested by a mass-spectrometry leak detector.

A disadvantage of the said method is the possibility of accepting untight articles as good ones in cases where microscopic defects are covered by atmospheric moisture.

The most close to the method, as described herein, is a method of testing leak tightness of fuel elements, consisting in that the elements are put into a chamber, wherein a vacuum is created, a leak detector is connected to the chamber and its signal is recorded. The leak tightness of the elements are judged by an increase of the signal over its background value (SU 647570, G 01 M 3/04, 1979). When implementing the known method, the elements are heated to a temperature of 300 - 400 °C before connecting the chamber to the leak detector and are held for some time to expose microscopic defects.

Some disadvantages of the method are:

- distortion of the test results, which is due to the intensive gas separation out of the material of the cases and end parts of the fuel elements when they are heated to a said temperature; it is accompanied by significant increase of the signals emitted by the leak detector and results in false rejecting article elements;
- possibility of passing untight elements due to evacuating the trace gas through large defects;
- the method is difficult to be made automated, and because of it its efficiency in the conditions of mass production is low.

The most close to the device, as described herein, is the device for testing leak tightness of fuel elements, which contains a control chamber connected to leak detector (L.Ye. Levina, V.V. Pimenov; Methods and Apparatus for testing leak tightness of vacuum equipment and products of the instrument-making industry; M. Mashinostroenie, 1985, p. 60). A known device enables to test elements automatically.

A disadvantage of the said automatic device is that when it is used for testing long elements (like fuel elements are), only end parts of the elements are tested, the whole surface of the element cases being untested. Moreover, a big disadvantage is that heating and holding for 40 - 60 minutes at temperatures in the range of 300 - 400 °C should be conducted directly in the test chamber, which in the conditions of the production and, naturally, testing, of one element per minute results in:

- either it is necessary to develop automatic testing devices with a great number of microscopic chambers, which would sharply reduce the no-failure operation time (since a failure in the leak tightness of even one microscopic chamber leads to depressurization of the automatic device on the whole due to the single vacuum system. Moreover, long holding at a vacuum lowers the threshold of the possibility to detect big leaks through which helium (trace gas) may be completely evacuated out of the elements, and the very element would be classified as tight;
- or it is necessary to sharply reduce the holding time of the elements at a high temperature, which creates preconditions to qualify elements with the smallest leaks as eligible products.

*Description of the Invention*

The objectives of the present invention are:

- to improve the technology of testing leak tightness of fuel elements by enlarging the range of leaks located when testing the whole surface of the fuel element, rather than only its end parts;

to completely automate the testing operation for performing it in the tempo of an automated line.

The said objectives are solved according to a method of testing leak tightness of fuel elements, consisting in that the elements are put into a chamber, wherein a vacuum is created, a leak detector is connected to the chamber and its signal is recorded; by an increase of the said signal over its background value the element leak tightness is judged; the elements, continuously and without gaps therebetween, are successively moved longitudinally through the stepwise pressure reduction zones, the test chamber and the stepwise pressure raising zones, the pressure value in the stepwise pressure reduction zones and in the stepwise pressure raising zones being set, proceeding from the following condition:

$$P_1 \gg P_2 < P_K > P_3 \ll P_4,$$

where:

$P_1$ and $P_2$ is the pressure in the two zones of pressure reduction before the test chamber;

$P_K$ is the pressure in the test chamber;
$P_3$ and $P_4$ is the pressure in the two zones of pressure raising after the test chamber; the elements are moved with the velocity W that is defined from the relation:

$$W < L/\tau,$$

where
L is the effective length of the test chamber;
$\tau$ is the stabilization time of the leak detector signal from that corresponding to the maximum permissible leak, and the volume $V_1$ of the first pressure reduction stage is selected from the relation:

$$\ln V_1 / \ln \left( \frac{\pi \cdot d_i^2 \cdot l}{4} - V_{EP} \right) > 3,$$

where
$V_{EP}$ is the volume of the end parts at the joint of two successive elements;
$l$ is the total length of the element end parts at the junction;
$d_i$ is the diameter of the element case.

The most optimal conditions for testing are achieved, according to this invention, by:

- longitudinal movement of each previous element is performed by pushing it with the following element;
- before feed into the first pressure reduction zone the element is heated and held at a given temperature in order to expose potential microscopic defects;
- the element is heated in the protective atmosphere of an inert gas;
- only those parts of the element are heated where the appearance of microscopic defects is most possible;
- the element is heated in the area of welded and/or soldered joints.

For the implementation of the method, the fuel elements test leak tightness device, containing the test chamber connected to the leak detector, is provided with additional chambers having means for the medium pumping out, here two successively communicated additional chambers being installed before the test chamber and two successively communicated additional chambers being installed after the test chamber; all the chambers are arranged coaxially and form a single channel for movement of the elements between all the chambers; also at the inlet to the first, in respect of the element movement direction; additional chamber and at the outlet of the last additional chamber labyrinth packings are arranged, and at the inlet of the first, in respect of the element movement direction, and a drive for moving the element longitudinally is arranged.

In order to obtain an optimal construction implementing the method of continuous testing of fuel elements leak tightness, it is proposed, according to this invention, that:

- before the inlet to the first, in respect of the element movement direction, chamber a transportation module be installed for moving the elements transversally, the said module be provided at its ends with slot heaters, the cavity of which is separated from the atmosphere by, at least, two protective screens made in the form of two overlapping rows of resilient, heat-wear resistant elements, the inlet for supplying an inert gas being arranged between the said screens;
- the means for pumping out the medium from the additional chambers, as arranged directly before and after the test chamber, have an increased pumping speed of the medium for the trace gas;
- the means for pumping out the medium from the additional chambers arranged directly before and after the test chamber to be made in the form of turbo-molecular pumps;
- all the chambers to be provided with means for aligning elements, which are to ensure the coaxial position of the elements and the channel for moving the elements;
- the means for aligning the elements to be composed of three sections made as an annular sector, those sections to be connected therebetween by axles freely inserted in the end parts of the adjacent sections, a centering roller being installed at each axle at the angle of 120 degrees relative to each other, and the sections to be made so as to allow radial movement and fixation in an intermediate position;
- the labyrinth packing to be made as a set of parts having the central cylindrical part with a hole and flutes made coaxial to the central cylindrical part;
- the labyrinth packing to be made from heat-resistant material having a low friction coefficient;
- as the heat-resistant material with a low friction coefficient Teflon is used;
- after the outlet of the latter, in respect of the element movement direction, additional chamber a drive is installed for moving the element longitudinally as well as a drive for further transportation;
- the construction is provided with an automatic control system, including a microprocessor controller and element availability sensors arranged at the inlet of the transportation module, at the initial position for longitudinal movement, at an intermediate position, at a position of non-driven transportation, and at the initial position for further transportation, all of them being connected through the controller with the drives, where the sensor installed at the inlet of the transportation module being connected with the drive of the transportation module for moving the elements, the sensor installed at the initial position for longitudinal transportation being connected with the drive for moving the elements, as arranged before the first, in respect of the elements movement direction, additional chamber, the sensor, installed at an intermediate position, is connected to the both drives for longitudinal movement of the elements, the sensor, installed at the position of non-driven transportation, is connected to the drive arranged at a place of the element output from the last additional chamber; the sensor, installed at the initial position for further transportation, is connected with the drive for further transportation.

The implementation of the claimed technical solutions enables to conduct continuous, individual for each article, fully automated test for leak tightness both at the room and at higher temperatures.

It allows to conclude that the claimed technical solutions are linked with a single inventive concept.

At present the testing of leak tightness of fuel elements produced at automated lines is performed by automatic devices, which do not enable to implement the test technology and guarantee the absolute absence of through microscopic defects in the finished products completely.

The peculiarities of the technology of TVELs testing are the following principal aspects:

- a leak tightness test is performed at the final stage of producing articles, after completing all the operations changing the form and geometry, which may be a cause of forming or developing potential microscopic defects;
- a leak tightness test is performed after the operations connected to contact with technological fluids, which may lead to closure of microscopic defects. Therefore, it is necessary before testing to perform a drying operation (that of thermal opening of microscopic defects);
- TVELs are used in power generating units of nuclear reactors at the temperature at their cases exceeding 300 °C, therefore they should be tested at the production stage at the same temperatures;
- the whole surface of the article should be tested, heated may be only those parts where the appearance of microscopic defects is most possible;
- in the conditions of mass production of articles most important as to their purpose, which fuel elements are, testing should be carried out individually, what, first, enables to fix and keep the test results for a particular fuel element, and, second, in case of rejected articles, to avoid subsequent grading;
- the leak tightness test operation, as one of the main operations certifying the quality of the products, should not depend on subjective factors and completely automated.

The compliance with the above requirements conditions new approaches both to the production modes and to the creation of an absolutely new equipment for testing the leak tightness of TVELs.

Fig 1 shows a schematic diagram of a unit for continuous testing of leak tightness of fuel elements.

Fig. 2 shows the main positions of the article in the process of its passing through the unit.

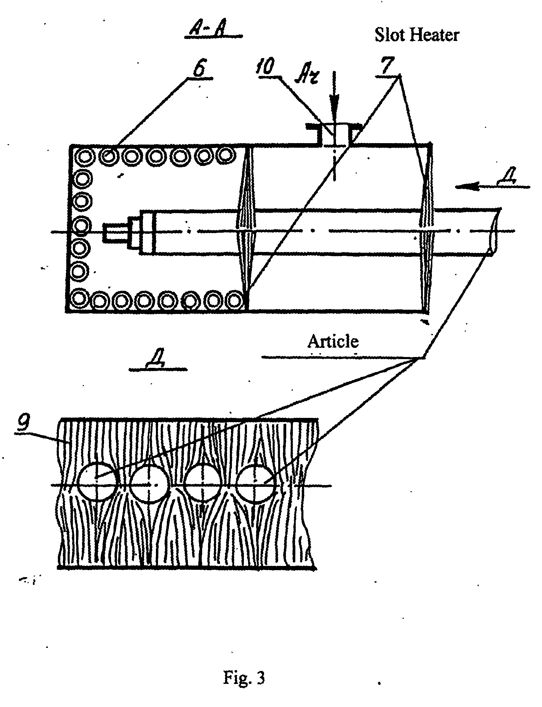

Fig. 3 shows a slot heater in its A-A section.

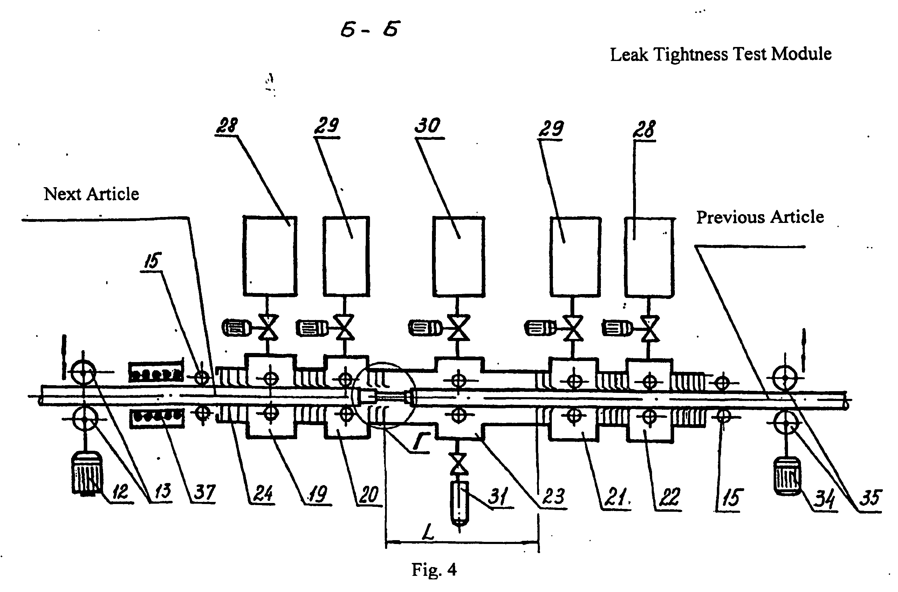

Fig 4. shows the leak tightness module test in its section B - B.

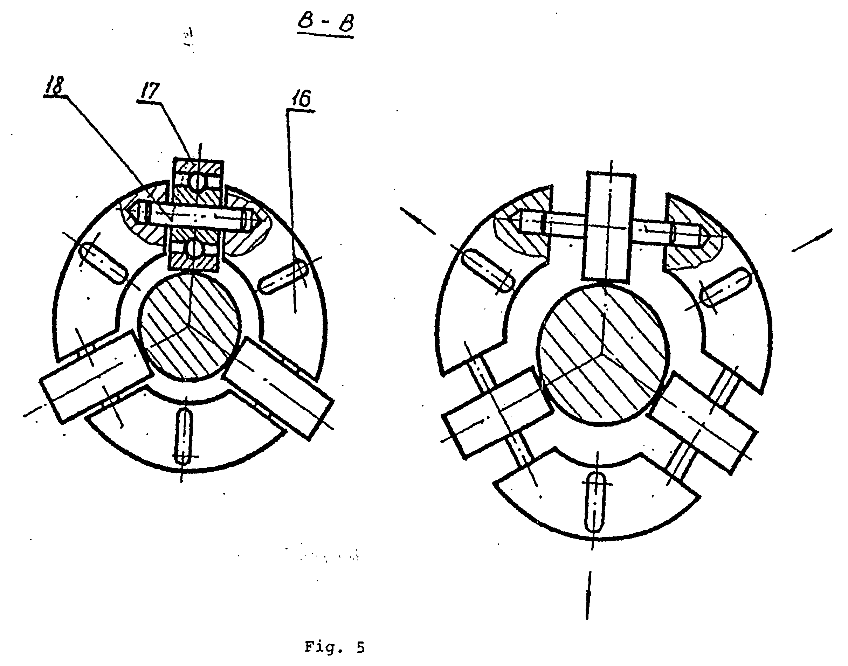

Fig. 5 shows the article aligning device in its section B - B.

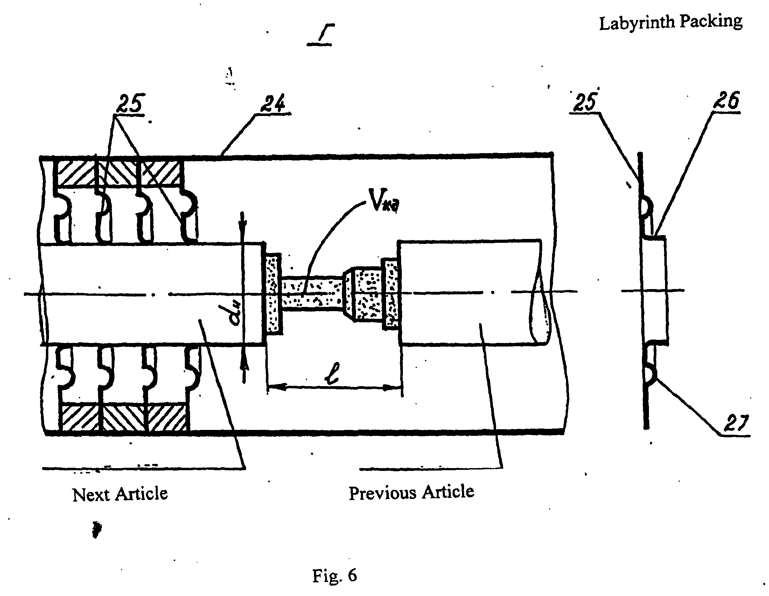

Fig. 6 shows a labyrinth packing in the section D - D.

The claimed method for continuous testing the leak tightness of fuel elements consists in the following.

The unit for leak tightness test consists of two modules: drying transportation module 1 and the leak tightness test module 2. The fuel elements intended for testing their leak tightness are fed to the initial position - position I of the transportation module 1. As soon as the first article (element) comes to the transportation module, the element availability sensor 3at the position I issues a command to the controller 4, which turns on the drive 5 of the transportation module; and the elements start moving in the transversal (in respect of their axis) direction with the tempo determined by the capacity of the unit. While in movement in the transversal direction, the end parts of fuel elements enter the slot heaters 6, which cavities are separated from the atmosphere by the protective screens 7 and are filled with an inert gas, e.g., argon, through argon inlets 8. To guarantee the creation of an inert medium in the cavities of the heaters 6, there are installed at least two screens 7, representing two overlapping rows of the thermal-wear resistant elements 9, and between the rows, through the inlet 10 additional volume of an inert gas is supplied, which ensures that heating is not extended to the fuel element parts that are non-protected with an inert gas. The necessary time of being the end parts in the heating zone (in reality being from 40 to 60 minutes - the time necessary for opening the microscopic defects characterized by the minimum allowable helium flows) and the tempo of their movement (in the conditions of mass production - app. 1 piece per minute) determine the quantity of the articles simultaneously being at the transportation module 1. Upon expiration of the drying time the article comes to the position II being the initial one for longitudinal movement of the article. At this time the element availability sensor 11 at the position II switches on, through the controller 4, the drive 12 (driving rollers 13 start moving), and the article is moved in the longitudinal direction, The front part of the article comes to the imitator 14 of the article and starts pushing it through the transportation channel. The imitator 14 is installed in the leak tightness test module 2 for all the vacuum pumps may reach their working mode when starting the unit and its switching off. At the entrance of the module 2 the article is centered by the device 15 consisting of three sections 16, each of them representing an annular sector and at the angle 120 ° therebetween the centering rollers 17 are positioned. The sections 16 are connected therebetween by axles 18 freely installed into the ends of the adjacent sections and serving as the supports for the centering rollers 17, and the very sections are capable of radially moving and being fixed in any intermediate position, which ensures exact centering as well as readjusting to another size if fuel elements. The centering devices 15 ensure the exact centering of the articles along the transportation channel, which is necessary for minimizing the radial gaps between the article surface and the transportation channel elements. The latter ensures the dynamic leak tightness of an article in the process of its movement and, correspondingly, the optimal conditions for creating a vacuum. The devices 15 are installed along the length of the transportation channel, i.e., in all the additional chambers 19, 20, 21, 22 and in the test chamber 23, as well as at the outlet of the test module. At the inlet of the test module an article passes through a labyrinth packing 24 made as a set of elements 25 having a central opening with the cylindrical portion 26 and a flute 27 made coaxial to the central opening. The elements 25 are made of a heat-resistant material with a low friction coefficient, e.g., of Teflon.

When passing the labyrinth packing the cylindrical parts 26 embrace the outer surface of an article, thus ensuring its dynamic leak tightness. In the first and the last, along the article movement, additional chambers, respectively 19 and 22, which are pumping out by the roughing-down pumps 28, the initial vacuum - residual pressure $P_{RES} < 13.3$ Pa ($10^{-1}$ mm Hg) is achieved. The relation of the pumped out volume $V_1$ of the chamber 19 to the constructive volume $V_{MI}$ at the junction of two articles, as formed due to the constructional difference of the end parts of a fuel element from its case, is one of the parameters influencing the test modes. The said relation should comply with the condition:

$$\ln V_1 / \ln V_{MI} > 3,$$

while

$$V_{MI} = \left( \frac{\pi \cdot d_i^2 \cdot l}{4} - V_{EP} \right);$$

where
$V_{EP}$ is the volume of the end parts at the junction of two successive elements;
$l$ is the total length of the end parts at the junction;
$d_i$ is the diameter of the element case.

If this condition is not complied with, it results in raising the residual pressure at the inlet of the second additional chamber 20, and through it in the test chamber 23 too, which sharply increases the signal of the leak detector corresponding to the article passing along the section of the test chamber, thus distorting the test results.

In the second, 20, and following the test chamber, chamber 21, which are separated from the chambers 19 and 22, respectively, by the labyrinth packing 24 and are pumping out by the high-vacuum pump 29, the vacuum is achieved, characterizing by the residual pressure $P_{res} < 1.33 \cdot 10^{-3}$ Pa $10^{-5}$ HG mm). the test chamber 23 in the working mode is pumped out only by the pump group of the helium leak detector 30, which is always in the mode of recording helium signal. In this at each moment of time the part of the article is tested, which is within the limits of the effective length of the test chamber 23, including its connection sections with the adjacent additional chambers. The velocity of the longitudinal movement of a fuel element is selected from the relation W < L/τ, which guarantees rejection of articles with leaks characterizing by the minimum allowable flows of helium. The value of τ is determined by experiments or calculated and represents the time of achieving the stable level of a signal from the minimal allowable (limited) leak. For the experimental determination the standard helium leak "Gelit"31 is used with the value of the helium flow that is less of equal to the leak of helium from the TVEL. It has been established experimentally that the time needed for stabilization of the leak detector signal at the claimed unit is in the range from 8 to 15 seconds (depending on the volume of the test chamber). Given the said time of being each point of the article in the test chamber, the complete pumping out of helium through any large leak is impossible, therefore this method of testing removes the limitation as to the size of large leaks.

The mode parameters of testing comply with the following requirements: $P_2 < P_K > P_4$ and high-vacuum pumps 29 have more pumping out capacity as to the trial gas (helium) that a high-vacuum pump of the leak detector 30. The compliance with these conditions ensures the minimization and a stable level of background signals recorded by the leak detector from knowingly leak tight articles.

When the front end of a TVEL completely passed all the chambers and its rear end approached the sensor 32, then, upon its command through the controller 4, the drive 12 is switched off (the towing driving rollers 13 are separated from each other, the fuel element stops at the intermediate position III, and pushed out by the article the imitator 14 being at the position being the initial point for further transportation of the articles along the automated line. In this position the imitator closes the sensor 33 upon command of which, transmitted by the controller 4, the drive of further transportation (not shown in the Figures), and the imitator 14 leaves position V. At the same time the drive 34 is switched on - the driving rollers 35 are brought together, which grasp the article from the other side and continue transporting it to the position IV, which is the initial point for the drive-less transportation and is characterized by that the front end of the fuel element has reached the sensor 36, which through the controller 4 issues the command for switching off the drive 34 (separation of the rollers 35). In the position IV the fuel element is until the time the following article to be tested, moving from the position II to the position III, starts to push it. The drive-less transportation is necessary to prevent possible accidents connected with the absence of an article along the length of the additional and the test chambers (entry of the atmosphere into the roughing-down and high vacuum pumps of the chambers and the leak detector). Furthermore, a stop at the position IV is necessary in order tp restore the temperature at the back end of the article, which lowered during the transportation. For this purpose a heater 37 is installed before the inlet into the chamber 19. When a tested article completely leaves all the chambers and stops at the position V, the leak detector issues a command to the controller 4, which command determines the transportation of the article further. In a case where a signal from the leak detector, while an article is tested, is not higher than that of the rejection level, the article is transported (longitudinally or transversally) to the next production operation. In the opposite case the article is send to the accumulator (not shown in the Figures) of rejected articles.

So, articles (elements) moving continuously one by one, are both being prepared to the test (heating and hold at a given temperature for a given period of time), if this is necessary, and are directly tested for leak tightness. When all the articles to be tested entered the transportation drying module 1, the last to be placed onto it is the imitator 14 of the article, which coming to the position IV (the initial point for drive-less transportation) closes by itself the through channel for passing articles through the chambers 19, 20, 23, 21, 22, being at this position until the restoration of the unit operation, and the first article to be tested starts pushing the imitator out. In the cases where the preparation (pre-drying) for the testing is not necessary, the heaters 6 of the transportation module 1 may be switched off, and the testing will be done at the room temperature.

*Industrial Applicability*

Thus, the described method and the device for continuously testing leak tightness may be implemented with the use of known means and enable:

- to ensure individual control over each article with the maximum sensitivity, which is the most preferred aspect of testing such important as to their purpose articles, as fuel elements. The said maximum sensitivity of testing is created by achieving the minimum values of the relation between the background signal to the rejection criterion and enables to significantly expand the range of identified defects to the side of small leaks (up to $10^{-10}$ m³ · Pa/s);

- to completely remove the limitation in respect of identified large leaks, since the time interval during which each point of the article is under a vacuum (from 8 to 15 seconds) is insufficient for complete pumping out the trial gas (helium) out of the fuel element case;

- to make the complex of preparing for the test and the test itself a single whole, while ensuring completely identical conditions of performing these operations for each and every article;

- to create a fully automated test complex operated in the tempo of an automated line (1 piece per minute), which is especially necessary in the conditions of mass production.

FIGURES

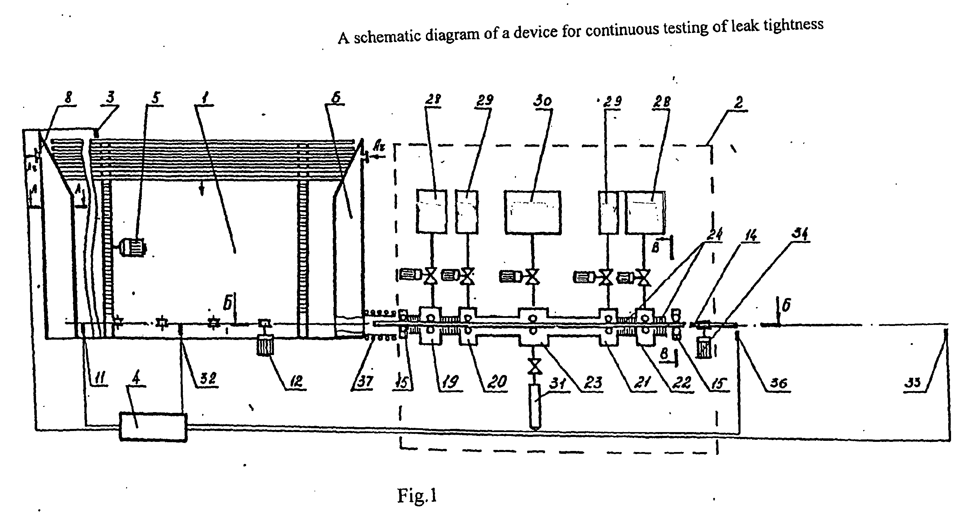

Fig. 1 - A schematic diagram of a device for continuous testing of leak tightness

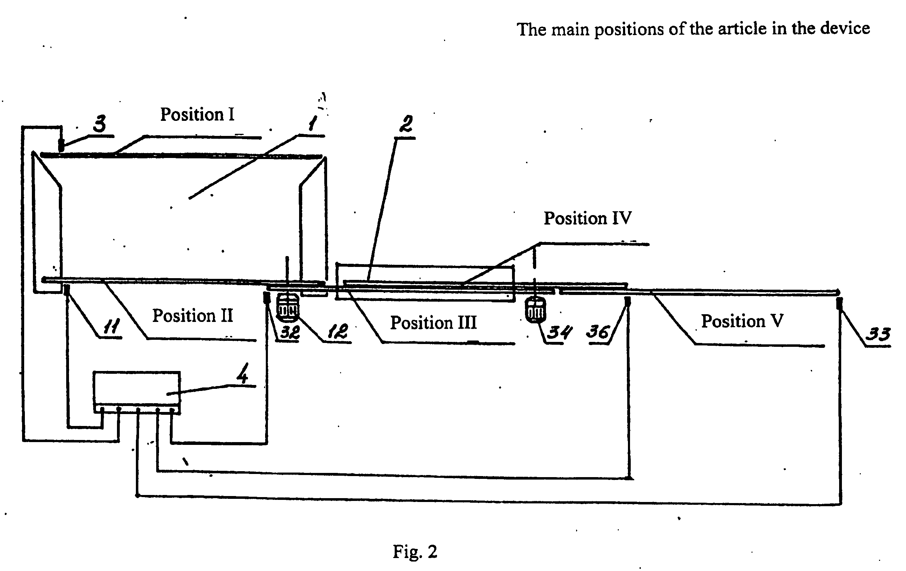

Fig. 2 - The main positions of the article in the device

Позиция I = Position I
Позиция II = Position II
Позиция III = Position III
Позиция IV = Position
Позиция V = Position V

Fig. 3

Щелевой НагреВаТеπb = Slot Heater

Изделие = Article

Fig. 4

Модуль контроля герметичности = Leak Tightness Test Module

Последующее изделие = Next Article

Предыдущее изделие = Previous Article

Fig. 5

Устройство для центровки изделий = Article centering device

Fig. 6

Лабиринтное уплотнение = Labyrinth Packing

Последующее изделие = Next Article

Предыдущее изделие = Previous Article

## Claims

1. A method of testing leak tightness of fuel elements, consisting in that the elements are put into a chamber, wherein a vacuum is created, a leak detector is connected to the chamber and its signal is recorded; by an increase of the said signal over its background value the element leak tightness is judged; **characterised by** that the elements, continuously and without gaps therebetween, are successively moved longitudinally through the stepwise pressure reduction zones, the test chamber (23) and the stepwise pressure raising zones, the pressure value in the stepwise pressure reduction zones and in the stepwise pressure raising zones being set, proceeding from the following condition:

$$P_1 \gg P_2 < P_K > P_3 \ll P_4,$$

where:

P_1 and P_2 is the pressure in the two zones of pressure reduction before the test chamber (23);
$P_K$ is the pressure in the test chamber (23);
$P_3$ and $P_4$ is the pressure in the two zones of pressure raising after the test chamber (23), the elements being moved with the velocity W that is defined from the relation:

$$W < L/\tau,$$

where
L is the effective length of the test chamber (23);
$\tau$ is the stabilization time of the leak detector (30) signal from that corresponding to the maximum permissible leak, and the volume $V_1$ of the first pressure reduction stage is selected from the relation:

$$\ln V_1 / \ln \left( \frac{\pi \cdot d_i^2 \cdot l}{4} - V_{EP} \right) > 3,$$

where
$V_{EP}$ is the volume of the end parts at the joint of two successive elements;
$l$ is the total length of the element end parts at the junction;
$d_i$ is the diameter of the element case.

2. A method according to claim 1, **characterized in that** the longitudinal movement of each preceding element is effected at the expense of pushing it out by the next element.

3. A method according to claim 1 or claim 2, **characterized in that** the element, before its feeding into the first pressure reduction zone, is heated and held at a given temperature in order to expose potential microscopic defects.

4. A method according to claim 3, **characterized in that** the element is heated in the protective atmosphere of an inert gas.

5. A method according to claim 3 or claim 4, **characterized in that** heated are only those parts of the element, where appearance of microscopic defects is most possible.

6. A method according to claim 5, **characterized in that** the element is heated in the area of welded and/or soldered joints.

7. A device for testing fuel elements leak tightness, containing the test chamber (23) connected to the leak detector (30), **characterized in that** it is provided with additional chambers having means for the medium pumping out, and two successively communicated additional chambers (19, 20) being installed before the test chamber (23) and two successively communicated additional chambers (21, 22) being installed after the test chamber (23), all the chambers being arranged coaxially and forming a single channel for movement of the elements through all the chambers namely, the stepwise pressure reduction zones, the test chamber (23) and the stepwise pressure raising zones, also at the inlet to the first, in respect of the element movement direction, additional chamber (19) and at the outlet of the last additional chamber (22) labyrinth packings (24) being arranged, and at the inlet of the first, in respect of the element direction, and a drive (12) for moving the element longitudinally being arranged.

8. A device according to claim 7, **characterized in that** before the inlet to the first, in respect of the element movement direction, chamber (19) a transportation module (1) is installed for moving the elements transversally, the said module being provided at its ends with slot heaters (6), the cavity of which is separated from the atmosphere by, at least, two protective screens (7) made in the form of two overlapping rows of resilient, heat-wear resistant elements (9), the inlet for supplying an inert gas being arranged between the said screens (7).

9. A device according to claim 7 or claim 8, **characterized in that** the means for pumping out the medium out of the additional chamber (19, 20, 21, 22) arranged directly before and after the test chamber (23) have an increased pumping out speed for a trial gas.

10. A device according to claim 9, **characterized in that** the means for pumping out the medium from the additional chambers arranged directly before and after the test chamber are made in the form of turbo-molecular pumps (28, 29).

11. A device according to claim 7, or claim 8, or claim 9, or claim 10, **characterized in that** all the chambers are provided with means for aligning elements, which ensure the coaxial position of the elements and the channel for moving the elements.

12. A device according to claim 11, **characterized in that** the means for aligning the elements is composed of three sections (16) made as an annular sector, those sections being connected therebetween by axles freely inserted in the end parts of the adjacent sections, a centering roller (17) being installed at each axle (18) at the angle of 120 degrees relative to each other, and the sections being made so as to allow radial movement and fixation in an intermediate position.

13. A device according to claim 7 or claim 8 or claim 9 or claim 10 or claim 11 or claim 12, **characterized in that** the labyrinth packing (24) is made as a set of parts having the central cylindrical part (26) with a hole and flutes (27) made coaxially to the central cylindrical part.

14. A device according to claim 13, **characterized in that** the labyrinth packing are made of a heat-resistant material with a low friction coefficient.

15. A device according to claim 14, **characterized in that** Teflon is used as the heat-resistant material with a low friction coefficient.

16. A device according to claim 7, or claim 8, or claim 9, or claim 10, or claim 11, or claim 12, or claim 13, or claim 14, or claim 15, **characterized in that** after the outlet of the latter, in respect of the element movement direction, additional chamber a drive is installed for moving the element longitudinally as well as a drive for further transportation.

17. A device according to claim 7, or claim 8, or claim 9, or claim 10, or claim 11, or claim 12, or claim 13, or claim 14, or claim 15, or claim 16, **characterized in that** it is provided with an automatic control system, including a microprocessor controller (4) and element availability sensors (3, 11, 32, 33, 36) arranged at the inlet of the transportation module, at the initial position for longitudinal movement, at the intermediate position, at the position of non-driven transportation, and at the initial position for further transportation, all of them being connected through the controller with the drives (5, 12, 34), and the sensor (3) installed at the inlet of the transportation module being connected with the drive (5) of the transportation module for moving the elements, the sensor (11) installed at the initial position for longitudinal transportation being connected with the drive (12) for moving the elements, as arranged before the first, in respect of the elements movement direction, additional chamber (19), the sensor (32), installed at the intermediate position, being connected to the both drives for longitudinal movement of the elements, the sensor (33), installed at the position of non-driven transportation, being connected to the drive (34) arranged at a place of the element output from the last additional chamber; the sensor (36), installed at the initial position for further transportation, being connected with the drive (34) for further transportation.

## Patentansprüche

1. Verfahren zum Testen der Leckdichtheit von Brennelementen, das darin besteht, dass die Elemente in eine Kammer gesetzt werden, in der ein Vakuum erzeugt wird, wobei ein Leckdetektor mit der Kammer verbunden wird und dessen Signal aufgezeichnet wird; wobei bei einer Erhöhung dieses Signales über dessen Hintergrundwert die Leckdichtheit des Elementes beurteilt wird, **dadurch gekennzeichnet, dass** die Elemente kontinuierlich und ohne Abstände zwischen diesen sukzessive in Längsrichtung durch die Zonen mit einem schrittweise reduzierten Druck, durch die Testkammer (23) und durch die Zonen mit einem schrittweise erhöhten Druck bewegt werden, wobei die Druckwerte in den Zonen mit schrittweise reduziertem Druck und in den Zonen mit schrittweise erhöhtem Druck festgelegt werden, wobei nach der folgenden Bedingung verfahren wird:

$$P_1 \gg P_2 < P_K > P_3 \ll P_4,$$

wobei
$P_1$ bzw. $P_2$ der Druck in den zwei Zonen mit reduziertem Druck vor der Testkammer (23) ist;
$P_K$ der Druck in der Testkammer (23) ist;
$P_3$ bzw. $P_4$ der Druck in den zwei Zonen mit erhöhtem Druck nach der Testkammer (23) ist, wobei die Elemente mit der Geschwindigkeit W bewegt werden, die durch die Beziehung bestimmt ist:

$$W < L/\tau,$$

wobei
L die effektive Länge der Testkammer (23) ist,
$\tau$ die Stabilisierungszeit des Signales des Leckdetektors (30) ausgehend von dem Wert entsprechend dem maximal erlaubbaren Leck ist, und das Volumen $V_1$ der ersten Stufe mit reduziertem Druck nach der Beziehung ausgewählt ist:

$$\ln V_1 / \ln \left( \frac{\pi \cdot d_1^2 \cdot l}{4} - V_{EP} \right) > 3,$$

wobei
$V_{EP}$ das Volumen der Endteile an der Verbindung von zwei aufeinander folgenden Elementen ist;
$l$ die totale Länge der Endteile des Elementes an der Verbindung ist;
$d_i$ der Durchmesser des Elementgehäuses ist.

2. Verfahren nach Anspruch 1, **dadurch gekennzeichnet, dass** die Längsbewegung eines jeden vorhergehenden Elementes **dadurch** bewirkt wird, dass es durch das nächste Element angestoßen wird.

3. Verfahren nach Anspruch 1 oder Anspruch 2, **dadurch gekennzeichnet, dass** das Element, bevor es in die erste Zone mit reduziertem Druck eingeführt wird, aufgeheizt und auf einer gegebenen Temperatur gehalten wird, um mögliche mikroskopische Defekte zu ermitteln.

4. Verfahren nach Anspruch 3, **dadurch gekennzeichnet, dass** das Element in der Schutzatmosphäre eines inerten Gases aufgeheizt wird.

5. Verfahren nach Anspruch 3 oder Anspruch 4, **dadurch gekennzeichnet, dass** lediglich die Teile des Elementes aufgeheizt werden, an denen das Auftreten von mikroskopischen Defekten am Wahrscheinlichsten ist.

6. Verfahren nach Anspruch 5, **dadurch gekennzeichnet, dass** das Element in dem Bereich von Schweiß- und/oder Lötverbindungen aufgeheizt wird.

7. Vorrichtung zum Testen der Leckdichtheit von Brennelementen, die die mit dem Leckdetektor (30) verbundene Testkammer (23) enthält, **dadurch gekennzeichnet, dass** die Vorrichtung mit zusätzlichen Kammern, die Einrichtungen zum Auspumpen des Mediums aufweisen, und mit zwei aufeinander folgenden und miteinander kommunizierenden zusätzlichen Kammern (19, 20) versehen ist, die vor der Testkammer (23) installiert sind, und zwei aufeinander folgende und miteinander kommunizierende zusätzliche Kammern (21, 22) aufweist, die nach der Testkammer (23) installiert sind, wobei alle Kammern koaxial angeordnet sind und einen einzigen Kanal für die Bewegung der Elemente durch alle Kammern bilden, nämlich die Zonen mit schrittweise reduziertem Druck, die Testkammer (23) und die Zonen mit schrittweise erhöhtem Druck, wobei an dem Einlass der in Bewegungsrichtung der Elemente ersten zusätzlichen Kammer (19) und auch am Auslass der letzten zusätzlichen Kammer (22), zumindest jedoch an dem Einlass der in Bewegungsrichtung der Elemente ersten Kammer Labyrinthdichtungen (24) angeordnet sind, und wobei ein Antrieb (13) zum Bewegen der Elemente in Längsrichtung vorgesehen ist.

8. Vorrichtung nach Anspruch 7, **dadurch gekennzeichnet, dass** vor dem Einlass in die in Bewegungsrichtung des Elementes erste Kammer (19) ein Transportmodul (1) installiert ist, um die Elemente transversal zu bewegen, wobei dieses Modul an seinen Enden mit Schlitzheizern (6) versehen ist, deren Hohlraum von der Atmosphäre durch zumindest zwei Schutzschirme (7) getrennt ist, die in Form von zwei überlappenden Reihen aus nachgiebigen, hitzebeständigen Elementen (9) gebildet sind, wobei der Einlass zum Zuführen eines inerten Gases zwischen diesen Schirmen (7) angeordnet ist.

9. Vorrichtung nach Anspruch 7 oder Anspruch 8, **dadurch gekennzeichnet, dass** die Einrichtungen zum Auspumpen des Mediums aus den zusätzlichen Kammern (19, 20, 21, 22), die direkt vor und nach der Testkammer (23) angeordnet sind, eine erhöhte Auspumpgeschwindigkeit für ein Prüfgas haben.

10. Vorrichtung nach Anspruch 9, **dadurch gekennzeichnet, dass** die Einrichtungen zum Auspumpen des Mediums aus den zusätzlichen Kammern, die direkt vor und nach der Testkammer angeordnet sind, jeweils in Form einer Turbo-Molekularpumpe (28, 29) ausgebildet sind.

11. Vorrichtung nach Anspruch 7, Anspruch 8, Anspruch 9 oder Anspruch 10, **dadurch gekennzeichnet, dass** alle Kammern mit Einrichtungen zum Ausrichten der Elemente versehen sind, die die koaxiale Position der Elemente und des Kanales für die Bewegung der Elemente sicherstellen.

12. Vorrichtung nach Anspruch 11, **dadurch gekenn-**

**zeichnet, dass** die Einrichtung zum Ausrichten der Elemente aus drei Abschnitten (16) zusammengesetzt ist, die einen ringförmigen Sektor bilden, wobei die Abschnitte miteinander durch Achsen verbunden sind, die frei beweglich in die Endteile der benachbarten Abschnitte eingeführt sind, wobei auf jeder Achse (18) eine Zentrierrolle (17) angeordnet ist, die zueinander einen Winkelabstand von jeweils 120° haben, und wobei die Abschnitte so ausgebildet sind, dass sie eine radiale Bewegung und Fixierung in einer Zwischenposition erlauben.

**13.** Vorrichtung nach Anspruch 7, Anspruch 8, Anspruch 9, Anspruch 10, Anspruch 11 oder Anspruch 12, **dadurch gekennzeichnet, dass** die Labyrinthdichtung (24) als Bauteil mit einem zentralen zylindrischen, ein Loch aufweisenden Teil (26) und mit Rippen, die koaxial zu dem zentralen zylindrischen Teil verlaufen, ausgebildet ist.

**14.** Vorrichtung nach Anspruch 13, **dadurch gekennzeichnet, dass** die Labyrinthdichtungen aus einem hitzebeständigen Material mit einem niedrigen Reibungskoeffizienten gemacht sind.

**15.** Vorrichtung nach Anspruch 14, **dadurch gekennzeichnet, dass gekennzeichnet**, dass Teflon als das hitzebeständige Material mit einem niedrigen Reibungskoeffizient verwendet wird.

**16.** Vorrichtung nach Anspruch 7, Anspruch 8, Anspruch 9, Anspruch 10, Anspruch 11, Anspruch 12, Anspruch 13, Anspruch 14 oder Anspruch 15, **dadurch gekennzeichnet, dass** nach dem Auslass der in Bewegungsrichtung der Elemente letzten zusätzlichen Kammer ein Antrieb zum Bewegen der Elemente in Längsrichtung und ein Antrieb für einen weiteren Transport installiert sind.

**17.** Vorrichtung nach Anspruch 7, Anspruch 8, Anspruch 9, Anspruch 10, Anspruch 11, Anspruch 12, Anspruch 1, Anspruch 14, Anspruch 15 oder Anspruch 16, **dadurch gekennzeichnet, dass** sie mit einem automatischen Steuersystem versehen ist, das eine Mikroprozessor-Steuerung (4) und Anwesenheitssensoren (3, 11, 32, 33, 36) für die Elemente umfasst, die an dem Eingang des Transportmodules, an der Eingangsposition für die Längsbewegung, an der Zwischenposition, an der Position für nicht angetriebenen Transport und an der Eingangsposition für einen weiteren Transport angeordnet sind, wobei alle Sensoren durch die Steuerung mit den Antrieben (5, 12, 34) verbunden sind, wobei der Sensor (3), der am Eingang des Transportmodules installiert ist, mit dem Antrieb (5) des Transportmodules zum Bewegen der Elemente verbunden ist, der Sensor (11), der an der Eingangsposition für den Längstransport installiert ist, mit dem Antrieb (12) zum Bewegen der Elemente, der vor der in Bewegungsrichtung der Elemente ersten zusätzlichen Kammer (19) angeordnet ist, verbunden ist, der Sensor (32), der an der Zwischenposition installiert ist, mit beiden Antrieben für die Längsbewegung der Elemente verbunden ist, der Sensor (33), der an der Position für einen Transport ohne Antrieb installiert ist, mit dem Antrieb (34) verbunden ist, der an einem Ort des Elementausganges aus der letzten zusätzlichen Kammer angeordnet ist, und wobei der Sensor (36), der an der Eingangsposition für einen weiteren Transport installiert ist, mit dem Antrieb (34) für den weiteren Transport verbunden ist.

## Revendications

**1.** Procédé de test d'étanchéité aux fuites d'éléments de combustible, consistant en ce que les éléments sont mis dans une chambre, où un vide est créé, un détecteur de fuite est connecté à la chambre, et son signal est enregistré ; par une augmentation dudit signal au-dessus de sa valeur de fond, l'étanchéité aux fuites de l'élément est estimée, **caractérisé en ce que** les éléments, en continu et sans espace entre ceux-ci, sont déplacés successivement longitudinalement à travers les zones de réduction de pression étagées, la chambre de test (23) et les zones d'augmentation de pression étagées, la valeur de pression dans les zones de réduction de pression étagées et dans les zones d'augmentation de pression étagées étant établie d'après la condition suivante :

$$P_1 >> P_2 < P_K > P_3 << P_4,$$

où :

P$_1$ et P$_2$ sont la pression dans les deux zones de réduction de pression avant la chambre de test (23),
P$_K$ est la pression dans la chambre de test (23),
P$_3$ et P$_4$ sont la pression dans les deux zones d'augmentation de pression après la chambre de test (23), les éléments étant déplacés avec la vitesse W qui est définie d'après la relation :

$$W < L/\tau,$$

où
L est la longueur effective de la chambre de test (23),
$\tau$ est le temps de stabilisation du signal du détecteur de fuite (30) par rapport à celui correspondant à la fuite admissible maximum, et la valeur $V_1$ du premier étage de réduction de pression est sélectionnée d'après la relation :

$$\ln V_1 / \ln\left(\frac{\pi \cdot d_i^{\,2} \cdot l}{4} - V_{EP}\right) > 3\,,$$

où

$V_{EP}$ est le volume des parties d'extrémité au niveau de la liaison de deux éléments successifs,
$l$ est la longueur totale des parties d'extrémité d'élément à la jonction,
$d_i$ est le diamètre de l'enveloppe d'élément.

2. Procédé selon la revendication 1, **caractérisé en ce que** le déplacement longitudinal de chaque élément précédent est effectué en le poussant par l'intermédiaire de l'élément suivant.

3. Procédé selon la revendication 1 ou 2, **caractérisé en ce que** l'élément, avant d'être introduit dans la première zone de réduction de pression, est chauffé et maintenu à une température donnée pour révéler des défauts microscopiques potentiels.

4. Procédé selon la revendication 3, **caractérisé en ce que** l'élément est chauffé dans l'atmosphère de protection d'un gaz inerte.

5. Procédé selon la revendication 3 ou 4, **caractérisé en ce que** sont chauffées uniquement les parties de l'élément où l'apparition de défauts microscopiques est la plus possible.

6. Procédé selon la revendication 5, **caractérisé en ce que** l'élément est chauffé dans la zone de joints soudés et/ou brasés.

7. Dispositif pour tester l'étanchéité aux fuites d'éléments de carburant, contenant la chambre de test (23) connectée au détecteur de fuite (30), **caractérisé en ce qu'**il est muni de chambres supplémentaires ayant des moyens pour le pompage de milieu, et deux chambres supplémentaires mises en communication successivement (19, 20) étant installées avant la chambre de test (23), et deux chambres supplémentaires mises en communication successivement (21, 22) étant installées après la chambre de test (23), toutes les chambres étant agencées coaxialement et formant un canal unique pour un déplacement des éléments à travers toutes les chambres, c'est-à-dire les zones de réduction de pression étagées, la chambre de test (23) et les zones d'augmentation de pression étagées, en outre, à l'entrée vers la première, par rapport à la direction de déplacement d'élément, chambre supplémentaire (19), et à la sortie de la dernière chambre supplémentaire (22) étant agencées des garnitures d'étanchéité en labyrinthe (24), et à l'entrée de la première, par rapport à la direction de déplacement d'élément, étant agencé un dispositif d'entraînement (12) pour déplacer l'élément longitudinalement.

8. Dispositif selon la revendication 7, **caractérisé en ce qu'**avant l'entrée vers la première, par rapport à la direction de déplacement d'élément, chambre (19), un module de transport (1) est installé pour déplacer les éléments transversalement, ledit module étant muni à ses extrémités de dispositifs de chauffage à fente (6) dont la cavité est séparée de l'atmosphère par au moins deux écrans de protection (7) réalisés sous la forme de deux rangées en chevauchement d'éléments élastiques résistant à l'usure par la chaleur (9), l'entrée pour alimenter un gaz inerte étant agencée entre lesdits écrans (7).

9. Dispositif selon la revendication 7 ou 8, **caractérisé en ce que** les moyens pour pomper le milieu à l'extérieur des chambres supplémentaires (19, 20, 21, 22) agencées directement avant et après la chambre de test (23) ont une vitesse de pompage accrue pour un gaz d'essai.

10. Dispositif selon la revendication 9, **caractérisé en ce que** les moyens pour pomper le milieu à partir des chambres supplémentaires agencées directement avant et après la chambre de test sont réalisés sous la forme de pompes turbo-moléculaires (28, 29).

11. Dispositif selon la revendication 7, 8, 9 ou 10, **caractérisé en ce que** toutes les chambres sont munies de moyens pour aligner des éléments, qui garantissent la position coaxiale de l'élément et du canal pour déplacer les éléments.

12. Dispositif selon la revendication 11, **caractérisé en ce que** les moyens pour aligner les éléments sont constitués de trois tronçons (16) réalisés sous la forme d'un secteur annulaire, ces tronçons étant connectés entre eux par des axes insérés librement dans les parties d'extrémité des tronçons adjacents, un galet de centrage (17) étant monté sur chaque axe (18) en formant un angle de 120 degrés les uns par rapport aux autres, et les tronçons étant réalisés pour permettre un déplacement radial et un maintien dans une position intermédiaire.

13. Dispositif selon la revendication 7, 8, 9, 10, 11 ou 12, **caractérisé en ce que** la garniture d'étanchéité en labyrinthe (24) est réalisée sous la forme d'un ensemble de parties ayant la partie cylindrique centrale (26) munie d'un trou, et des goulottes (27) réalisées coaxialement par rapport à la partie cylindrique centrale.

**14.** Dispositif selon la revendication 13, **caractérisé en ce que** les garnitures d'étanchéité en labyrinthe sont constituées d'un matériau résistant à la chaleur ayant un faible coefficient de frottement.

**15.** Dispositif selon la revendication 14, **caractérisé en ce que** du Téflon est utilisé comme matériau résistant à la chaleur avec un faible frottement.

**16.** Dispositif selon la revendication 7, 8, 9, 10, 11, 12, 13, 14 ou 15, **caractérisé en ce qu'**après la sortie de la dernière, par rapport à la direction de déplacement d'un élément, chambre supplémentaire est installé un dispositif d'entraînement pour déplacer l'élément longitudinalement, de même qu'un dispositif d'entraînement pour un transport supplémentaire.

**17.** Dispositif selon la revendication 7, 8, 9, 10, 11, 12, 13, 14, 15 ou 16, **caractérisé en ce qu'**il est muni d'un système de commande automatique incluant un dispositif de commande à microprocesseur (4) et des capteurs de disponibilité d'élément (3, 11, 32, 33, 36) agencés à l'entrée du module de transport, dans la position initiale pour un déplacement longitudinal, dans la position intermédiaire, dans la position d'un transport non-entraîné, et dans la position initiale pour un transport supplémentaire, tous ceux-ci étant connectés à travers le dispositif de commande à l'aide des dispositifs d'entraînement (5, 12, 34), et le capteur (3) installé à l'entrée du module de transport étant connecté au dispositif d'entraînement (5) du module de transport pour déplacer les éléments, le capteur (11) installé dans la position initiale pour un transport longitudinal étant connecté au dispositif d'entraînement (12) pour déplacer les éléments, lorsqu'agencé avant la première, par rapport à la direction de déplacement des éléments, chambre supplémentaire (19), le capteur (32), installé dans la position intermédiaire, étant connecté au deux dispositifs d'entraînement pour un déplacement longitudinal des éléments, le capteur (33), installé dans la position de transport non-entraîné, étant connecté au dispositif d'entraînement (34) agencé à un emplacement de la sortie d'élément à partir de la dernière chambre supplémentaire, le capteur (36), installé dans la position initiale pour un transport supplémentaire, étant connecté au dispositif d'entraînement (34) pour un transport supplémentaire.

A schematic diagram of a device for continuous testing of leak tightness

Fig.1

The main positions of the article in the device

Position I

3

Position IV

Position II

11

Position III

32

12

34

36

Position V

33

4

Fig. 2

EP 1 207 380 B1

*A - A*

Slot Heater

*6* *10* *Aг* *7*

*Д*

Article

*Д*

*9*

Fig. 3

Leak Tightness Test Module

Next Article

Previous Article

28  29  30  29  28

15

12  13  37  24  19  20  31  23  21  22  15  34  35

L

Fig. 4

EP 1 207 380 B1

B - B

Fig. 5

17

Fig. 6